# EUROPEAN PATENT APPLICATION

(11) **EP 2 627 106 A2**
(43) Date of publication of application: **14.08.2013**
(21) Application number: 13154329.0
(22) Date of filing: 07.02.2013
(51) Int. Cl.: H04W 4/02, H04L 29/08

(54) **Local downloading of temporary applications for mobile devices**

(30) Priority: 09.02.2012 US 201213369842
(71) Applicant: EchoStar Technologies L.L.C., Englewood, CO 80112 (US)
(72) Inventor: Curtis, Craig, Sugar Hill, GA 30518 (US)
(74) Representative: Reeve, Nicholas Edward

(57) **Abstract**

A system and related methods of managing computer-executable applications for a mobile device are provided. The method determines when the mobile device is located within an application support area corresponding to an application provider, and wirelessly downloads a temporary application at the mobile device. The downloaded temporary application is installed at the mobile device, resulting in an installed temporary application. Thereafter, the method detects when the mobile device has left the application support area and, in response to the detecting, the mobile device is configured such that the installed temporary application cannot be executed.

## Description

### TECHNICAL FIELD

Embodiments of the subject matter described herein relate generally to executable applications suitable for downloading to mobile devices. More particularly, embodiments of the subject matter relate to the management of downloadable applications within a designated application support area for purposes of limiting access to the applications.

### BACKGROUND

The prior art is replete with mobile devices and executable applications suitable for use with mobile devices. Indeed, the popularity of full-featured cellular telephones and tablet computers has increased dramatically in recent times. A wide variety of downloadable computer-executable applications (often referred to as "apps") has been developed for use with such mobile devices. Mobile apps can be purchased via the cellular telecommunication network for quick and easy downloading to cellular-based mobile devices. Such apps are downloaded for installation locally at the mobile devices. Thereafter, the user of the mobile device has immediate access to the downloaded apps. Downloaded mobile apps are intended to be "permanently installed" at the mobile devices. Accordingly, downloaded and installed mobile apps remain persistent until the user deletes or uninstalls them (or if the mobile device fails in some manner that corrupts or deletes the installed mobile apps).

### SUMMARY OF THE INVENTION

The invention is defined in the independent claims to which reference should now be made. Advantageous features are set out in the dependent claims.

An exemplary embodiment of a method of managing computer-executable applications for a mobile device is provided. The method determines when the mobile device is located within an application support area corresponding to an application provider and, in response to the determination, wirelessly downloads a temporary application at the mobile device, resulting in a downloaded temporary application. The method continues by installing the downloaded temporary application at the mobile device, resulting in an installed temporary application. Thereafter, the method detects when the mobile device has left the application support area and, in response to the detection, configures the mobile device such that the installed temporary application cannot be executed.

The mobile device may perform the determining and/or the detecting by sensing the presence of a limited range wireless network maintained at a location associated with the application provider. The limited range wireless network may comprise a wireless local area network (WLAN).

Also provided is another exemplary method of managing computer-executable applications for a mobile device. The method involves determining when the mobile device is located within an application support area corresponding to an application provider. The method wirelessly receives, at an application server system, configuration data that indicates native functional capabilities of the mobile device. The method proceeds by processing the configuration data at the application server system to generate a list that identifies at least one available temporary application supported by the application provider, wherein the configuration data indicates that the at least one available temporary application can be installed and executed by the mobile device. The method continues by wirelessly transmitting the list to the mobile device.

In one embodiment, the method may comprise collecting loyalty points for the application provider, wherein the loyalty points are linked to the mobile device; and applying the loyalty points to unlock capabilities, features, or enhancements of the installed temporary application.

Also provided is an exemplary embodiment of a system to manage downloadable computer-executable applications for mobile devices. The system includes an application server system deployed at a location associated with an entity, the application server system configured to maintain a temporary application suitable for downloading to a mobile device. The system also includes a wireless access device deployed at or near the location and operatively coupled to the application server system. The wireless access device establishes wireless connectivity with the mobile device when the mobile device is located within an application support area of the location. The application server and the wireless access device cooperate to wirelessly download the temporary application to the mobile device when the mobile device is located within the application support area. The temporary application is configured to be installed and executed at the mobile device when the mobile device is located within the application support area, and is configured to be automatically disabled or uninstalled from the mobile device when the mobile device leaves the application support area.

The application server system may perform the determining by obtaining global positioning system (GPS) data of the mobile device.

The application server system may perform the determining when the mobile device establishes wireless connectivity with a limited range wireless network maintained at a location associated with the application provider.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic representation of an exemplary operating environment for a system that manages downloadable applications for mobile devices;
FIG. 2 is a schematic representation of an exemplary embodiment of an application server system suitable for use in the operating environment depicted in FIG. 1;
FIG. 3 is a schematic representation of an exemplary embodiment of a mobile device suitable for use in the operating environment depicted in FIG. 1; and
FIG. 4 is a flow chart that illustrates an exemplary embodiment of an application download process.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques and technology related to computing devices, software applications, wireless data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter presented here relates to a system and related operating methods that serve "temporary" software applications to mobile devices that are located within close proximity to a particular business, store, dwelling, or any location. In practice, the applications can be relatively lightweight and compact in size, which accommodates quick and efficient downloading from an application server to a mobile device that is operating within a predefined zone or area that supports the downloadable applications. For example, a store or a restaurant could maintain a wireless local area network (WLAN) for its premises and provide free applications (such as video games, a loyalty point tracker or accumulator, an audio or video jukebox, or the like) to mobile devices that are within the wireless range of the WLAN. The applications, however, are disabled or deleted as soon as the mobile devices leave the premises. Thus, the availability of temporary applications can serve as a marketing tool to attract customers to the premises.

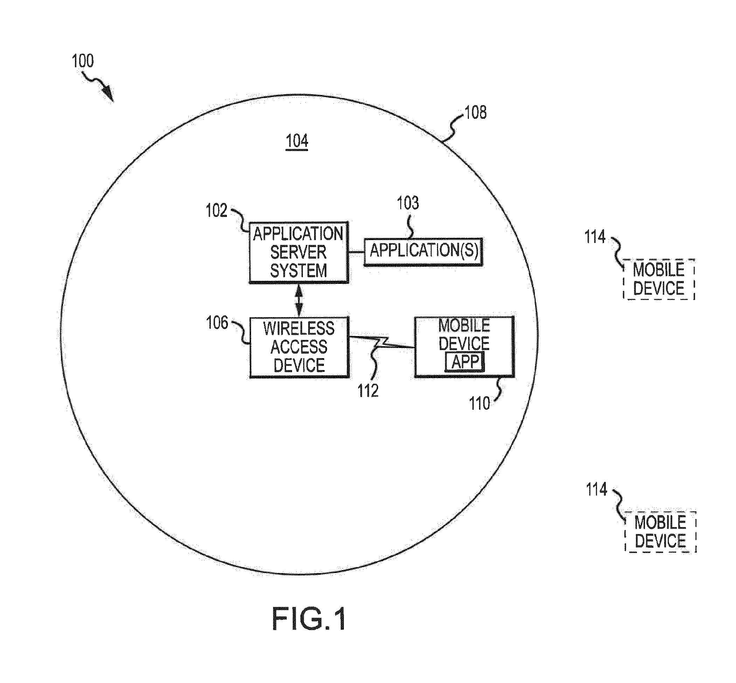

FIG. 1 is a schematic representation of an exemplary operating environment for a system 100 that manages downloadable computer-executable applications for mobile devices. The system 100 is based around an application server system 102 that is configured to maintain at least one temporary application 103 for downloading to mobile devices. FIG. 1 depicts a simplified implementation having only one application server system 102 deployed at or near a location 104 that is associated with an entity (such as a business, a company, a restaurant, a store, an office, a school, or the like). The entity associated with the system 100 represents an "application provider" in the context of this description in that the entity provides downloadable software applications 103 to mobile devices when certain requirements are met.

In practice, the system 100 may include any number of application server systems that cooperate with one another. Moreover, the application server system 102 need not be physically located at the location 104 and, in certain embodiments, the application server system 102 could be remote from the location 104, with appropriate data communication capabilities that enable the application server system 102 to communicate with infrastructure components resident at the location 104.

The system 100 also includes at least one wireless access device 106 that is operatively coupled to the application server system 102. The wireless access device 106 is deployed at or near the location 104 to support wireless data communication with mobile devices that are positioned within an application support area 108. This application support area 108 may, but need not, correspond to the wireless data communication range of the wireless access device 106. The wireless access device 106 may be implemented using any platform, and it may be suitably configured to support one or more wireless data communication protocols as appropriate to the particular embodiment. Any number of suitable wireless data communication protocols, techniques, or methodologies may be supported by the wireless access device 106, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; cellular/wireless/cordless telecommunication protocols; wireless home network communication protocols; paging network protocols; magnetic induction; satellite data communication protocols; wireless hospital or health care facility network protocols such as those operating in the WMTS bands; GPRS; and proprietary wireless data communication protocols such as variants of Wireless USB. In certain preferred embodiments, the wireless access device 106 can be implemented as a wireless router that is compatible with the IEEE 802.11x standard, as is well understood. Alternatively, the wireless access device 106 could be realized as a module or element that is integrated with or embedded in another device or piece of hardware, e.g., a computer, a set-top box, a monitor, a piece of audio-visual equipment, telecommunication equipment, or the like.

In accordance with well known wireless data communication principles, the wireless access device 106 establishes and maintains wireless connectivity with a mobile device 110 when the mobile device 110 is located within the application support area 108 of the location 104. FIG. 1 illustrates the scenario where the mobile device 110 is well within the boundary defined by the application support area 108 and, thus, has wireless connectivity (via a wireless link 112) with the wireless access device 106. In contrast, the mobile devices 114 are located outside of the application support area 108 and, therefore, have little to no wireless connectivity with the wireless access device 106. In other words, the mobile devices 114 are unable to effectively and reliably exchange data wirelessly with the wireless access device 106 because they are not within the wireless data communication range of the wireless access device 106. As explained in more detail below, the wireless link 112 can be utilized (while the mobile device 110 is located within the application support area 108) to transfer data between the wireless access device 106 and the mobile device 110. For example, the mobile device 110 can wirelessly transmit device configuration data, download requests, and/or other information to the wireless access device 106. In addition, the wireless access device 106 can be used to provide a list of available applications to the mobile device 110 and to facilitate the wireless downloading of temporary applications to the mobile device 110.

It should be appreciated that the mobile device 110 may also support the downloading of applications by way of a cable, a tangible network connection, or any suitable data communication hardware. Use of a tangible downloading mechanism could be employed in addition to or in lieu of the preferred wireless transport techniques described herein.

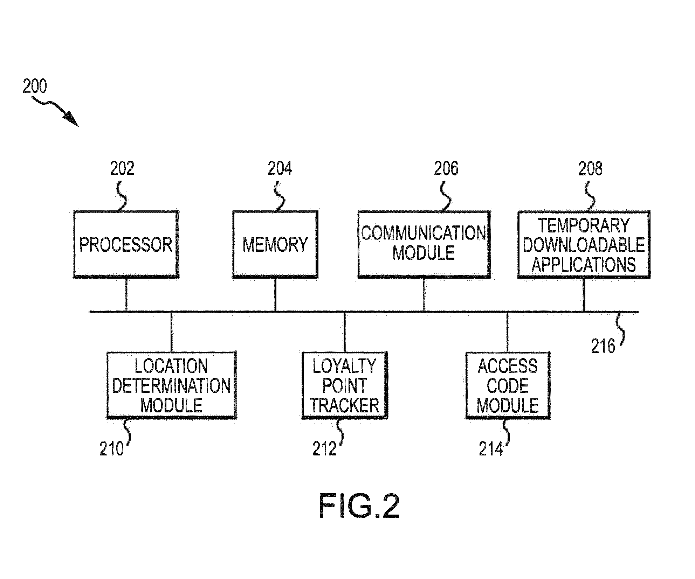

FIG. 2 is a schematic representation of an exemplary embodiment of an application server system 200 suitable for use in the operating environment depicted in FIG. 1. In this regard, the application server system 102 shown in FIG. 1 could be implemented in accordance with the application server system 200 shown in FIG. 2. The application server system 200 may be suitably configured to support the particular application and system architecture. In certain embodiments, for example, the application server system 200 can be deployed using traditional computer-implemented server hardware and software. FIG. 2 depicts a generalized configuration that could be deployed using any operating platform.

For the illustrated embodiment, the application server system 200 includes or cooperates with: at least one processor 202; a suitable amount of memory 204; a communication module 206; one or more temporary downloadable applications 208; a location determination module 210; a loyalty point tracker 212; and an access code module 214. An implementation of the application server system 200 may include additional functional elements and components that are suitably configured to support traditional or well known features, which will not be described in detail here. The elements of the application server system 200 may be coupled together via a bus or any suitable interconnection architecture 216.

The processor 202 may be implemented or performed with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. The processor 202 may be realized as a microprocessor, a controller, a microcontroller, or a state machine. Moreover, the processor 202 may be implemented as a combination of computing devices, e.g., a combination of a digital signal processor and a microprocessor, a plurality of microprocessors, one or more microprocessors in conjunction with a digital signal processor core, or any other such configuration.

The memory 204 may be realized as RAM memory, flash memory, EPROM memory, EEPROM memory, registers, a hard disk, a removable disk, a CD-ROM, or any other form of storage medium known in the art. In this regard, the memory 204 can be coupled to the processor 202 to enable the processor 202 to read information from, and write information to, the memory 204. In the alternative, the memory 204 may be integral to the processor 202. As an example, the processor 202 and the memory 204 may reside in an ASIC. The memory 204 may be employed to save and maintain data and information that is used in connection with the temporary application downloading techniques described below.

The communication module 206 enables the application server system 200 to communicate with one or more wireless access devices in the system environment (e.g., the wireless access device 106 shown in FIG. 1). In practice, the communication module 206 could support wireless data communication and/or data communication over physical links, as appropriate to the particular embodiment. In this regard, the communication module 206 could support wired data communication using an Ethernet connection, using a universal serial bus (USB) connection, or the like. The communication module 206 may also be designed to support one or more wireless data communication protocols, including any of the wireless techniques mentioned above in connection with the wireless access device 106.

Although depicted as a distinct block in FIG. 2, the downloadable applications 208 could be maintained and stored in the local memory 204 of the application server system 200. Alternatively or additionally, the downloadable applications 208 could be maintained and stored in any suitable storage element that is attached to (or otherwise communicates with) the application server system 200. Each downloadable application is a computer-executable application that can be downloaded to a mobile device for execution using the native capabilities of the mobile device. This description refers to "temporary" downloadable applications because the system is intended to grant the mobile devices only temporary or geographically limited access to the downloadable applications. More specifically, the system is suitably configured such that the mobile devices can temporarily access and run a downloadable application 208 only when the mobile devices are located within the designated application support area.

The functionality of each downloadable application 208 is unimportant for purposes of this description. To this end, each downloadable application 208 can be designed and written as needed to perform the intended functions and to provide the intended feature set. For example, the downloadable applications 208 may include, without limitation: video game applications; media player applications; shopping portal applications; video conferencing applications; messaging applications; or the like. Moreover, multiple versions of a downloadable application 208 can be maintained by the application server system 200, where the different versions are designed to accommodate different mobile device platforms (and different native operating systems). Thus, the application server system 200 could maintain and support a mobile phone version of a given downloadable application 208, a laptop computer version of the same application, and a tablet computer version of the same application.

The location determination module 210 represents hardware, software, firmware, and/or an application that is configured to obtain, analyze, resolve, or otherwise determine the current location or position of mobile devices for purposes of making the temporary downloadable applications 208 available to those mobile devices. In certain embodiments, the location determination module 210 obtains geographic positioning data (such as global positioning system data) from the mobile devices. In other embodiments, the location determination module 210 determines that a mobile device is located within the application support area in response to the wireless discovery of the mobile device. In yet other embodiments, the location determination module 210 determines the position of a mobile device using triangulation techniques that rely on a plurality of wireless access devices, cellular telephone base stations, or the like. Accordingly, the location determination module 210 may be configured to obtain the location of a mobile device based on raw data or information received from the mobile device and/or other sources. Alternatively or additionally, the location determination module 210 may be configured to simply receive the location or position of the mobile device after the location or position has been determined by the mobile device and/or other sources. In other words, the location determination module 210 may, but need not, include the intelligence and processing capability to actually determine the location of the mobile device.

The loyalty point tracker 212 represents hardware, software, firmware, and/or an application that is configured to maintain, collect, process, or handle loyalty points assigned to the mobile devices or to the users of the mobile devices. It should be appreciated that the loyalty point tracker 212 could be used to keep track of anything that can be accumulated on behalf of a mobile device or a user, including, without limitation: value points; rewards points; frequency of visitation; amount of money spent at a store or business; the number of times each downloadable application is executed, used, or downloaded; a game playing status, state, level, or stage for a user of a downloadable game application; or the like. In practice, the loyalty point tracker 212 could cooperate with the mobile devices in an appropriate manner to allow the mobile devices to accumulate points, "spend" value points, or otherwise use or process the accumulated items maintained by the application server system 200.

The access code module 214 represents hardware, software, firmware, and/or an application that is configured to maintain, manage, issue, and otherwise handle access codes, passwords, or the like, for purposes of regulating use of the downloadable applications. For example, a temporary application downloaded to a mobile device may remain locked or inaccessible until a valid access code is entered at the mobile device. To this end, the access code module 214 may be responsible for maintaining and issuing access codes or passwords, which in turn can be given to users to enable them to execute the downloaded applications. Thus, a cashier or clerk at a store or restaurant can provide a valid access code to patrons to allow the patrons to use the temporary downloaded applications.

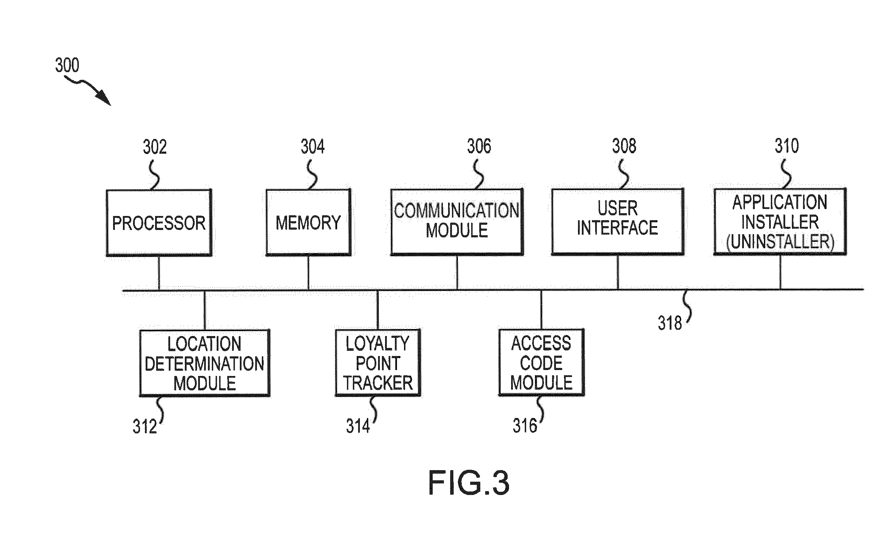

FIG. 3 is a schematic representation of an exemplary embodiment of a mobile device 300 suitable for use in the operating environment depicted in FIG. 1. In this regard, the mobile device 110 shown in FIG. 1 could be implemented in accordance with the mobile device 300 shown in FIG. 3. It should be appreciated that the mobile device 300 could be realized using a variety of different device platforms. For example, the mobile device 300 could be implemented as any of the following, without limitation: a cellular telephone; a portable computer (e.g., a laptop, a tablet, or a netbook computer); a portable media player; a portable video game device; a portable medical device; etc.

For the illustrated embodiment, the mobile device 300 includes: at least one processor 302; a suitable amount of memory 304; a communication module 306; a user interface 308; an application installer/uninstaller 310; a location determination module 312; a loyalty point tracker 314; and an access code module 316. An implementation of the mobile device 300 may include additional functional elements and components that are suitably configured to support traditional or well known features, which will not be described in detail here. The elements of the mobile device 300 may be coupled together via a bus or any suitable interconnection architecture 318.

The processor 302 and the memory 304 can be generally configured as described above for the processor 202 and the memory 204 of the application server system 200. Thus, the processor 302 and the memory 304 cooperate to support a variety of functions and operations of the mobile device 300. The communication module 306 allows the mobile device 300 to wirelessly communicate with wireless access devices (such as the wireless access devices maintained at various locations of interest), cellular networks, or the like. The communication module 306 may also be configured to support data communication using a tangible link such as a USB cable, as is well understood. As explained in more detail below, the communication module 306 is suitably configured to exchange data with an application server system to facilitate the downloading of temporary software applications for execution at the mobile device 300. Accordingly, the communication module 306 may support one or more wireless data communication protocols, including any of the wireless techniques mentioned above in connection with the wireless access device 106.

The mobile device 300 also includes a user interface (UI) 308 that allows the user to control the operation of the mobile device 300. The UI 308 may include a keypad, keys, buttons, switches, knobs, a touch screen, a joystick, a pointing device, a virtual writing tablet, a display element, a speaker or other audio transducer, indicator lights, or any device, component, or function that enables the user to select options, input information, obtain audio information, obtain visual information, or otherwise interact with the mobile device 300 and/or other devices within the system.

The application installer/uninstaller 310 represents hardware, software, firmware, and/or processing logic that handles the installation and deletion (uninstalling) of downloaded applications for the mobile device 300. The application installer/uninstaller 310 could be automatically activated in response to the successful downloading of an application, or it could be called in response to a user-entered command or instruction. In certain embodiments, the application installer/uninstaller 310 may be suitably configured to extract a compatible version of a temporary application from a plurality of available versions (e.g., from a downloaded installation package), while disregarding or discarding other versions that are not suitable for use with the particular mobile device platform.

The location determination module 312, the loyalty point tracker 314, and the access code module 316 may be generally configured to support the functionality described above for their counterparts in the application server system 200. Accordingly, the location determination module 312 is suitably configured to obtain, analyze, resolve, or otherwise determine the current location or position of the mobile device 300. In practice, the location determination module 312 may include or cooperate with a GPS receiver, with a received signal strength (RSS) analyzer, with a triangulation based positioning module, or the like. Certain embodiments of the location determination module 312 rely on the wireless discovery and wireless association capabilities of the mobile device 300 for purposes of determining whether or not the mobile device 300 is located within an application support area.

The loyalty point tracker 314 can maintain, collect, process, or handle loyalty points assigned to the mobile device 300 or to the user of the mobile device 300, as described above. Accumulated loyalty points can be used to unlock certain features of a downloaded application, spent at the associated place of business, collected to earn store or restaurant coupons, discounts, or promotions, or the like. In this regard, the loyalty point tracker 314 may be designed to support temporary downloadable applications for any number of different entities.

The access code module 316 is configured to process, maintain, and otherwise handle access codes, passwords, or the like, for purposes of regulating use of the downloadable applications. In this regard, the access code module 316 can process user-entered access codes or passwords for a downloaded application, and provide access to the application when a valid access code has been entered. It should be appreciated that the use of access codes or passwords may be mandatory, optional, or not required at all, depending on the particular application, the requirements of the application provider, etc.

Referring again to FIG. 1, mobile devices that support the temporary download/install methodology described here can roam in and out of different application support areas (which may be maintained by any number of different entities, and which may be located in a geographically distributed manner) while being presented with different temporary applications that are associated with the different application support areas. For example, the mobile device 110 may have access to a video game application while the mobile device 110 remains in the application support area 108 depicted in FIG. 1. That video game application, however, will be disabled or uninstalled as soon as the mobile device 110 leaves the application support area 108. If the mobile device 110 travels to another compatible application support area (which may be in a different neighborhood, a different city, a different state, etc.), one or more temporary applications become available to the mobile device 110. It should be appreciated that, under this scenario, the user of the mobile device 110 can be presented with different downloadable (but temporary) applications as the mobile device 110 is carried into different application support areas.

In accordance with one practical scenario, a plurality of different application support areas are maintained by the same entity (e.g., different areas within a large department store, a shopping mall, an amusement park, etc.). Thus, the user of a mobile device can be presented with promotional or marketing related applications that encourage the user to visit different application support areas. The loyalty point tracking functionality of the system can be utilized to accumulate points or markers as the mobile device travels to the different application support areas. In this way, the user of the mobile device could be rewarded for visiting a designated number of different areas, shops, attractions, or the like. The same general approach could be used to allow users to collect virtual "goods" or "pets" as they visit different areas or stores, with some reward or acknowledgement at the end of the day before the temporary application(s) are disabled or uninstalled.

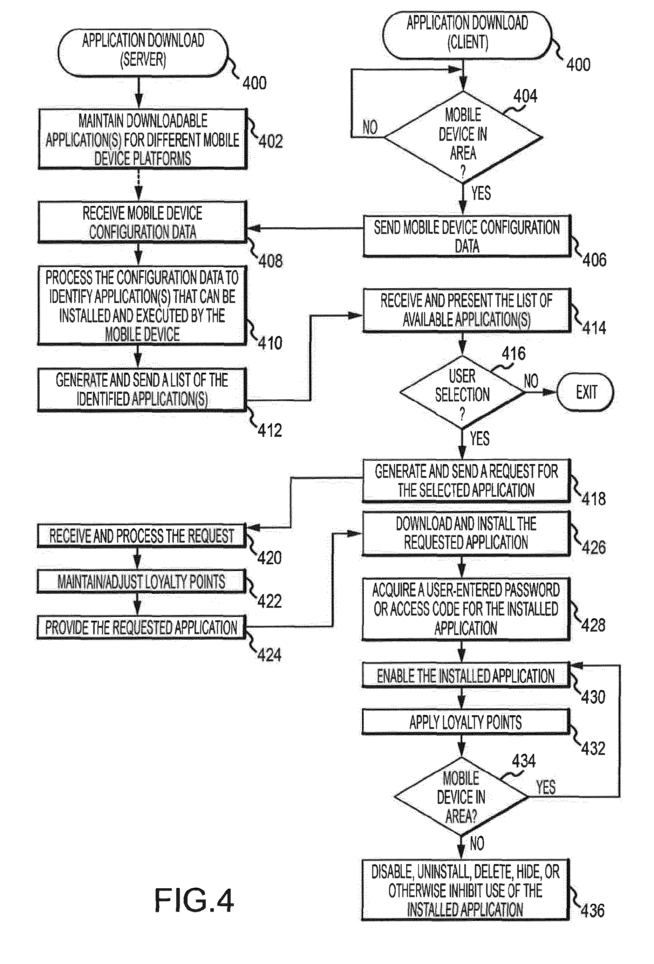

FIG. 4 is a flow chart that illustrates an exemplary embodiment of an application download process 400. The process 400 represents one exemplary embodiment of a method of managing computer-executable applications for mobile devices. The various tasks performed in connection with the process 400 may be performed by software, hardware, firmware, or any combination thereof. For illustrative purposes, the following description of the process 400 may refer to elements mentioned above in connection with FIGS. 1-3. In practice, portions of the process 400 may be performed by different elements of the described system, e.g., a mobile device, an application server system, or a functional module thereof. It should be appreciated that the process 400 may include any number of additional or alternative tasks, the tasks shown in FIG. 4 need not be performed in the illustrated order, and the process 400 may be incorporated into a more comprehensive procedure or process having additional functionality not described in detail herein. Moreover, one or more of the tasks shown in FIG. 4 could be omitted from an embodiment of the process 400 as long as the intended overall functionality remains intact.

The illustrated embodiment of the process 400 contemplates some tasks being performed by a mobile device or client and other tasks being performed by an application server system. The tasks associated with the mobile device are shown on the right side of FIG. 4, and the tasks associated with the application server system are shown on the left side of FIG. 4. It should be appreciated that the process 400 reflects merely one of many different possible operating scenarios, and that in practice the interaction between mobile devices and different application server systems need not always follow the routine depicted in FIG. 4.

In accordance with the illustrated embodiment of the process 400, one or more downloadable software applications are maintained by the application server system (task 402). This example assumes that different versions of the downloadable temporary applications are maintained for different mobile device platforms, such as cellular telephones, tablet computer devices, video game devices, and the like. In practice, an application provider (e.g., a business entity, a municipality, a shopping mall landlord, or the like) can maintain the temporary applications and make them available to patrons, customers, or visitors having compatible mobile devices.

The exemplary embodiment of the process 400 assumes that the mobile device determines whether or not it is currently located within an application support area maintained by, or otherwise corresponding to, an application provider (task 404). As mentioned above, the current geographic location of the mobile device could be determined by obtaining GPS data at the mobile device and by analyzing or processing the GPS data to determine whether or not the current GPS coordinates correspond to a location within an application support area. In another embodiment, the mobile device performs the location determination by sensing the presence of a limited range wireless network (such as a WLAN) maintained at a location associated with the application provider. In this regard, the mobile device may assume that it is located within an application support area in response to the discovery of a compatible WLAN. As another example, the mobile device may determine that it is located within an application support area by associating with a wireless access point of a compatible WLAN that is maintained by an application provider. In certain embodiments, the mobile device determines its position using triangulation techniques (which may be based on the strength of signals received from a plurality of wireless access devices, from a plurality of cellular network base stations, or the like).

Alternatively, the application server system might perform or participate in the location determination. As described above, an application server system located within an application support area could utilize GPS techniques, wireless network discovery techniques, triangulation techniques, and/or other schemes to resolve the position of the mobile device and to check whether or not the mobile device is currently located within the application support area.

This example assumes that the mobile device has entered an application support area, and that its presence within the application support area has been detected (the "Yes" branch of query task 404). In response to this determination, the process 400 sends configuration data of the mobile device (task 406), and receives the configuration data at the application server system (task 408). The configuration data can be wirelessly transferred from the mobile device to the application server system using any suitable wireless technology, preferably the limited range wireless network that also defines the application support area. In certain embodiments, the mobile device configuration data indicates the native functional capabilities of the mobile device. In this regard, the configuration data may include an identifier or network address of the mobile device, and it may include a description of the computing platform, operating system, and processing abilities of the mobile device. The configuration data may also include information related to loyalty points, the number of times the mobile device has visited the application support area, temporary applications that have been downloaded in the past by the mobile device, and/or other data related to the operation, support, or history of the mobile device in association with the application provider.

In certain embodiments, the mobile device sends a suitably formatted encrypted password or other type of identifier to the server when the mobile device enters the application support area. The password sent by the mobile device serves as a notification to the server that the mobile device is operating within the application support area and that the server can proceed with the application downloading steps described in more detail below.

In response to receiving the configuration data, the application server system processes the configuration data to identify applications that are compatible with the native functional capabilities of the mobile device (task 410). In other words, the process 400 identifies the available temporary applications that can be installed and executed by the mobile device, based on the information conveyed in the configuration data. In this regard, the configuration data may include (or be transmitted with) a request for compatible or eligible temporary applications. Ideally, task 410 will identify at least one downloadable application that is compatible with the mobile device, and task 410 will disregard any downloadable application that is not fully compatible with the mobile device. This example assumes that the application server system processes the configuration data to verify that at least one temporary application is compatible, and can be successfully installed and executed by the mobile device. Accordingly, the process 400 generates and sends a list that identifies or includes at least one compatible temporary application that is supported by the application provider (task 412).

This example assumes that the mobile device receives the list from the application server system (task 414), and that the list is presented in an appropriate format to the user of the mobile device. The list can be wirelessly transferred from the application server system to the mobile device using any suitable wireless technology, preferably the limited range wireless network that also defines the application support area. In practice, the list can be displayed at the mobile device as a GUI element that accommodates user interaction and selection of items on the list. The illustrated embodiment of the process 400 assumes that one of the applications in the list is selected at the mobile device (the "Yes" branch of query task 416). In practice, the user of the mobile device can interact with the displayed list to generate a user-entered selection command or instruction for the desired application. In response to this selection, the process 400 generates and sends a suitably formatted request for the selected application (task 418). The request can be wirelessly transmitted from the mobile device to the application server system using any suitable wireless technology, preferably the limited range wireless network that also defines the application support area.

This example assumes that the request is received and processed at the application server system (task 420). In connection with the processing of the request, the application server system identifies and retrieves the requested temporary application, and prepares the application for downloading to the mobile device. If applicable, the process 400 maintains, adjusts, collects, or otherwise manages any loyalty or rewards points that might be associated with the requested application, linked to the mobile device, and/or associated with the user of the mobile device. Data associated with a loyalty or rewards program can be maintained and stored by the application server system and/or provided to the mobile device with the application to be downloaded.

Eventually, the application server system provides the requested application or otherwise makes it accessible for downloading (task 424), and the mobile device downloads and installs the requested application (task 426). In practice, the system could be designed such that only signed or otherwise identifiable applications are sent to the mobile device. In such a deployment, the mobile device would reject any unauthorized or unrecognized applications that might be pushed or sent to the mobile device. The temporary application can be wirelessly downloaded to the mobile device using any suitable wireless technology, preferably the limited range wireless network that also defines the application support area. In this regard, the downloading and installation of the application occurs while the mobile device is located within the designated application support area. In certain embodiments, the temporary application is downloaded and maintained at the mobile device until the user initiates an installation procedure at the mobile device. In other embodiments, the temporary application is automatically installed without any further involvement of the user. In yet other embodiments, the server could send an appropriate encrypted password to the mobile device to allow the application to be installed.

If the downloaded application requires an access code or password to be installed or to be executed, then the mobile device may present a suitably formatted GUI element to the user (e.g., a text entry field). The illustrated embodiment of the process 400 assumes that the mobile device acquires a valid user-entered password or access code for the application (task 428). In some implementations, a required password or access code could be automatically entered or entered by the server as soon as the mobile device connects to the server. In other words, the user of the mobile device need not manually enter or otherwise obtain an access code, and the processing of such access codes could be carried out as a background procedure that is transparent to the user.

In response to the entry of a valid access code, the process 400 enables the installed temporary application (task 430) such that the user can execute and use the application. If applicable, the process 400 can apply or otherwise utilize loyalty or rewards points in an appropriate manner (task 432). For example, the system may allow the user to apply loyalty points to unlock certain features, capabilities, functions, or enhancements of the installed application. As another example, the system may allow the user to apply loyalty points (which may be accessible via the installed application) towards purchases made at a store, restaurant, or business that is associated with the application support area, or that maintains the application server system.

For this particular embodiment, the installed application is temporary in that it only remains active and accessible to the user while the mobile device is present within the defined application support area. Accordingly, the process 400 checks whether or not the mobile device is still operating within the application support area (query task 434). The various location determining techniques described above with reference to query task 404 can also be leveraged here. If query task 434 determines that the mobile device is still in the application support area (the "Yes" branch of query task 434), then the process 400 may return to task 430 and keep the application active and enabled. On the other hand, if the process 400 detects that the mobile device has left the application support area (the "No" branch of query task 434), then the mobile device is configured or operated such that the installed temporary application can no longer be executed, accessed, or used (task 436). In certain embodiments, task 436 uninstalls or deletes the temporary application from the mobile device. In other embodiments, task 436 retains the installed application, but disables it or otherwise renders it inoperable. Disabling the application in this manner may be desirable to accommodate quick and efficient reactivation of the application (rather than requiring repeated downloading, installing, and uninstalling whenever the mobile device returns to the application support area). In yet other embodiments, the installed application is preserved at the mobile device, but the process 400 hides the installed application such that it cannot be viewed, accessed, or launched by the user of the mobile device.

Notably, the methodologies described here can be utilized to automatically download, automatically install, and automatically disable/uninstall executable mobile applications based on the current location of the mobile device relative to one or more application support areas. Thus, a downloadable computer-executable software application suitable for use by a mobile device can be downloaded and installed in response to the detection of the mobile device entering an application support area. Moreover, the application can be automatically disabled or uninstalled from the mobile device when the mobile device leaves the application support area.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method of managing computer-executable applications for a mobile device, the method comprising:
determining when the mobile device is located within an application support area corresponding to an application provider;
in response to the determining, wirelessly downloading a temporary application at the mobile device, resulting in a downloaded temporary application;
installing the downloaded temporary application at the mobile device, resulting in an installed temporary application;
thereafter, detecting when the mobile device has left the application support area; and
in response to the detecting, configuring the mobile device such that the installed temporary application cannot be executed.

2. The method of claim 1, wherein the mobile device performs the determining and/or the detecting by obtaining global positioning system (GPS) data at the mobile device.

3. The method of claim 1 or 2, wherein the mobile device performs the determining and/or the detecting by sensing presence of a limited range wireless network maintained at a location associated with the application provider.

4. The method of any preceding claim, further comprising:
acquiring, at the mobile device, a user-entered access code for the installed temporary application; and
enabling the installed temporary application when the user-entered access code is valid.

5. The method of any preceding claim, further comprising:
wirelessly receiving a list that identifies at least one available temporary application supported by the application provider, wherein the list includes the temporary application; and
selecting, at the mobile device, the temporary application from the list, wherein wirelessly downloading the temporary application is initiated in response to the selecting.

6. The method of any preceding claim, wherein the configuring comprises uninstalling the installed temporary application from the mobile device.

7. The method of any preceding claim, wherein the configuring comprises disabling the installed temporary application.

8. The method of any preceding claim, wherein the configuring comprises hiding the installed temporary application such that it cannot be accessed by a user of the mobile device.

9. The method of any preceding claim, wherein the determining is performed by an application server system associated with the application provider.

10. The method of any preceding claim, wherein the application server system is located within the application support area.

11. A method of managing computer-executable applications for a mobile device, the method comprising:
determining when the mobile device is located within an application support area corresponding to an application provider;
wirelessly receiving, at an application server system, configuration data that indicates native functional capabilities of the mobile device;
processing the configuration data at the application server system to generate a list that identifies at least one available temporary application supported by the application provider, wherein the configuration data indicates that the at least one available temporary application can be installed and executed by the mobile device; and
wirelessly transmitting the list to the mobile device.

12. The method of claim 11, further comprising:
receiving a request at the application server system, the request indicating a temporary application on the list; and
in response to receiving the request, wirelessly downloading the requested temporary application to the mobile device when the mobile device is located within the application support area.

13. A system to manage downloadable computer-executable applications for mobile devices, the system comprising:
an application server system deployed at a location associated with an entity, the application server system configured to maintain a temporary application suitable for downloading to a mobile device; and
a wireless access device deployed at or near the location and operatively coupled to the application server system; wherein:
wherein the wireless access device establishes wireless connectivity with the mobile device when the mobile device is located within an application support area of the location;
wherein the application server and the wireless access device cooperate to wirelessly download the temporary application to the mobile device when the mobile device is located within the application support area; and
wherein the temporary application is configured to be installed and executed at the mobile device when the mobile device is located within the application support area, and is configured to be automatically disabled or uninstalled from the mobile device when the mobile device leaves the application support area.

14. The system of claim 13, wherein:
the application server system and the wireless access device cooperate to wirelessly receive configuration data from the mobile device;
the configuration data indicates native functional capabilities of the mobile device; and
the application server system processes the configuration data to verify that the temporary application can be installed and executed by the mobile device.

15. The system of claim 13 or 14, wherein:
the mobile device determines when the mobile device is located within the application support area;
the mobile device generates a request for a list that identifies at least one available temporary application supported by the application server system;
the mobile device sends the request to the application server system, via the wireless access device; and
the application server system and the wireless access device wirelessly download the temporary application to the mobile device in response to the request.
